# DEMANDE DE BREVET EUROPEEN

(11) **EP 1 077 406 A1**
(43) Date de publication de la demande: **21.02.2001**
(21) Numéro de dépôt: 00402239.8
(22) Date de dépôt: 07.08.2000
(51) Int. Cl.: G06F 9/44

(54) **Procédé de production automatique de spécifications**

(30) Priorité: 16.08.1999 FR 9910517
(71) Demandeur: ALCATEL, 75008 Paris (FR)
(72) Inventeur: Rioux, Laurent, 91300 Massy (FR); Jacolot, Christian, 91460 Marcoussis (FR)
(74) Mandataire: Lamoureux, Bernard

(57) **Abrégé**

On traduit des spécifications écrites en langage SDL en spécifications écrites en langage UML-RT. Pour ce faire on analyse un fichier contenant les spécifications SDL, on y repère les mots clés et groupement de mots clés intéressant pour les transformer en mots clés correspondant et équivalent en langage UML-RT.

## Description

L'invention a pour objet un procédé de production automatique de spécifications. Le domaine de l'invention est celui de la description ou de la spécification de protocoles et de procédés de traitement de données. Ce domaine est connu sous le nom de langage de haut niveau, ou de langage de quatrième génération. La particularité de ces langages est qu'ils permettent à la fois l'analyse et la résolution d'un problème. Le but de l'invention est de traduire les spécifications écrites dans l'un de ces langages, vieillissant, en spécification correspondant à un autre de ces langages plus récents. La traduction se fait de manière automatique, afin de pouvoir réutiliser des spécifications et descriptions existantes, ce à moindre coût.

Dans l'état de la technique on connaît le langage SDL (Specification and Description Language). Ce langage est un langage de description et de spécification. Ce langage a été créé en 1980. Il est défini par la recommandation Z.100 de l'UIT (Union International de Télécommunication). A l'origine le langage SDL a donc été conçu pour le domaine des télécommunications. Il est donc particulièrement bien adapté à ce domaine, aussi on rencontre quelques difficultés lorsqu'on veut l'utiliser dans d'autres domaines comme l'aviation, le contrôle ferroviaire, ou le domaine médical.

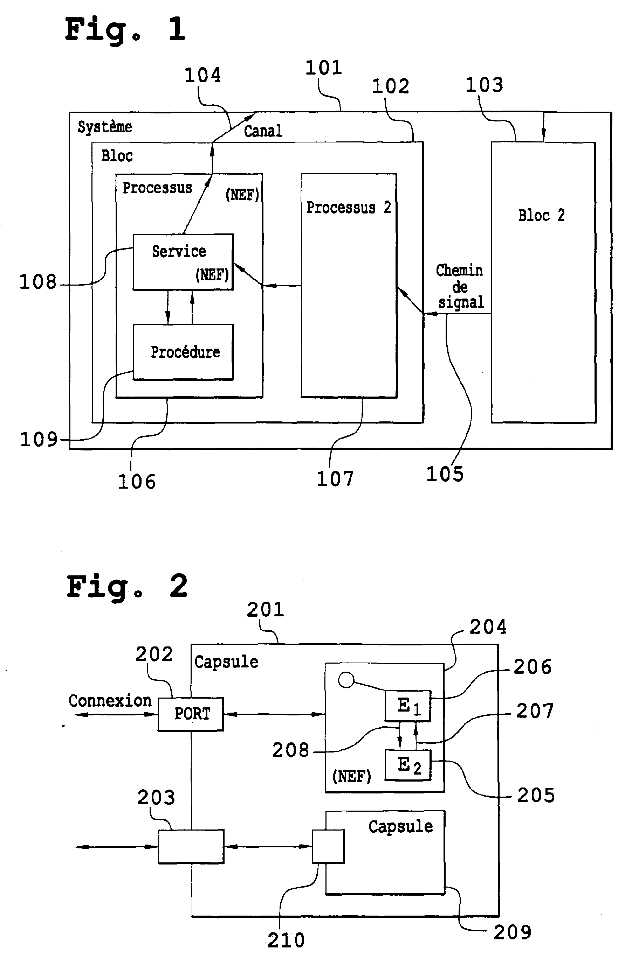

Le langage SDL est basé sur une analyse à plusieurs niveaux d'un problème. On commence par le niveau général, le plus élevé, en considérant le problème comme un système. C'est ce que montre la figure 1. Le système 101 comporte des blocs tels que par exemple les blocs 102 et 103. Le bloc 102 communique avec l'extérieur du système 101 par un canal 104. Les blocs 102 et 103 communiquent entre eux par un chemin 105 de signal.

Le bloc 102 peut comporter à son tour un processus 106 et un processus 107. Le processus 106 peut comporter un ou plusieurs services 108 et une ou plusieurs procédures 109. Un service est caractérisé par un comportement qui est représenté sous forme d'une machine à états finis. Une machine à états finis comporte des états et des transitions entre chacun de ces états. Sur la figure 1, les blocs 102 et 103 n'ont pas été représentés avec les mêmes dimensions, mais pourtant ils sont d'égale importance hiérarchiquement. Il en va de même pour le processus 106 et le processus 107. Au même titre il peut très bien y avoir plus de deux blocs dans un système. En règle générale, le nombre d'éléments compris dans un élément d'un niveau de description supérieur est très variable. Dans une description SDL, la hiérarchisation de cette description est donc exprimée par différentes notions. Par notions, il faut comprendre système, processus, services, procédures, chemins de signal et canal. Cette hiérarchisation, bien que très pratique, est malheureusement aussi très rigide. De plus il en découle une mémorisation dans une mémoire de sauvegarde qui elle aussi est très rigide.

Cette rigidité a pour conséquence qu'une fois qu'une spécification ou modélisation a été écrite, il est très difficile de la modifier pour la faire évoluer, ou de réutiliser un de ses éléments dans une autre spécification ou modélisation. Ceci est un problème. En effet deux systèmes peuvent être très voisins et nécessiter des périodes de développement similaires, bien que successives dans le temps. Avec une spécification écrite dans un tel langage, on ne peut pas réutiliser des éléments de l'un dans l'autre.

Dans l'état de la technique on connaît aussi le langage UML-RT (Unified Modelling Languages for Real Time). Ce langage est un langage unifié pour la modélisation dans les applications temps réel. Ce langage a les mêmes caractéristiques que le langage SDL, mais il ne manipule que trois notions. A savoir la notion de capsule, la notion de port et la notion de connexion entre ports. Chaque capsule peut contenir soit d'autres capsules soit une machine à états finis ou les deux. Une modélisation ou spécification est alors réalisé par un réseau de capsules interconnectées par les ports.

La figure 2 montre à cet effet une capsule 201 qui comporte un port 202 et un port 203. La capsule 201 comporte aussi une machine 204 à états finis qui est connectée au port 202. La machine 204 produit des états 205 et 206 évoluant entre eux par des transitions 207 et 208. La capsule 201 comporte aussi une capsule 209 qui comporte un port 210. Le port 210 est connecté au port 203. La capsule communique avec ce qui lui est extérieur par l'intermédiaire des ports 202 et 203. La principale caractéristique du langage UML-RT et l'indépendance entre le comportement interne de la capsule 201 et l'extérieur. Le langage UML-RT permet donc de modéliser une application en utilisant des capsules qui sont facilement réutilisables pour d'autres applications. Il est aussi facile de modifier une capsule, puisque l'intérieur d'une capsule est indépendant de l'extérieur.

Ces deux langages, SDL et UML-RT, ont donc une approche des problèmes totalement différente. Le langage SDL est très hiérarchisé et figé dans sa hiérarchie, alors que le langage UML-RT bien que hiérarchisé est beaucoup plus souple dans son emploi et dans son réemploi du fait de l'indépendance des capsules.

L'invention résout des problèmes de développement lié à cette dualité de langage en permettant le passage d'un langage évolué ancien à un autre plus récent, dans le sens SDL vers UML-RT. En agissant ainsi, on simplifie d'une part l'évolution des systèmes et on les rend d'autre part directement compatibles entre eux. Pour ce faire, dans l'invention on analyse la représentation en mémoire de la modélisation d'une application en langage SDL. On y recherche des mots clés du langage SDL et on les remplace par des mots clés équivalents du langage UML-RT. Puis on analyse des relations qui existent entre différents éléments constituant la modélisation en langage SDL pour les convertir en des relations, souvent plus simples, équivalentes en langage UML. Cette transformation permet, d'une part, de réutiliser des éléments déjà développés en langage SDL, mais aussi de faire évoluer des applications existantes qui ont été faites à l'origine en langage SDL.

L'invention a donc pour objet un procédé de traduction automatique d'une première spécification en langage SDL vers une second spécification en langage UML-RT, ladite spécification en langage SDL comportant des notions de système, de blocs, de processus, de services, de canaux et ou de chemins de signaux en fonction d'un niveau de détail décrit dans une application à spécifier, caractérisé en ce que
- on remplace des notions clés correspondant aux éléments système, blocs, processus et service du langage SDL par des notions clés capsules du langage UML-RT,
- on remplace des notions clés correspondant à canaux et chemins de signaux du langage SDL par des notions clés correspondantes connexions et ports du langage UML-RT,
- on remplace des notions clé correspondant à des signaux en langage SDL par des notions clé correspondant à des signaux en langage UML-RT.

En pratique, le remplacement des notions se réalise simplement en remplaçant dans les programmes correspondant aux spécifications des mots clés d'un langage par des mots clés d'un autre. On montrera alors qu'on peut produire très rapidement, à partir de spécifications écrites dans un langage ancien des spécifications écrites dans un langage plus récent. Une telle production permet d'une part une mise à jour simple des programmes existants et d'autre part la modularité recherchée et la réutilisation possible d'éléments de programmes.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : une illustration des éléments servant à la modélisation ou la spécification d'une application en langage SDL ;
- Figure 2 : une illustration des éléments servant à la modélisation ou la spécification des applications en langage UML-RT ;
- Figures 3a à 3c : une modélisation d'une application en langage SDL;
- Figures 4a à 4c : une modélisation de la même application que pour les figures 3a à 3c mais en langage UML-RT ;
- Figure 5 : une illustration de détail d'une capsule UML-RT ;
- Figure 6 : une illustration des moyens utiles pour la mise en oeuvre de l'invention.
- Figure 7a: une illustration de la description du comportement d'un service en langage SDL.
- Figure 7b: une illustration de la description du comportement d'une capsule en langage UML-RT.

La figure 3a montre une vue de plus haut niveau dans une description en langage SDL. Il s'agit d'une analyse descendante. Plus on descend dans les niveaux, plus on se rapproche des détails d'une application à décrire. La figure 3a montre un système 301 appelé SI. Le système 301 contient un bloc 302 appelé B1 et un bloc 303 (B2). Dans un exemple, le système 301 admet trois signaux en entrée. Ces signaux sont I1, I2 et I3. Un canal 304 véhicule les signaux I1 et 12 depuis l'extérieur du système 301 vers le bloc 302. Un canal 305 véhicule le signal 13 depuis l'extérieur du système 301 vers le bloc 303. En langage SDL on parle en effet de canal lorsque les signaux sont véhiculés de l'extérieur du système vers l'intérieur du système ou de l'intérieur du système vers l'extérieur du système.

Un canal 306 véhicule un signal de sortie O1 du bloc 302 vers l'extérieur du système 301. Un canal 307 véhicule un signal de sortie 02 du bloc 303 vers l'extérieur du système 301. Enfin un chemin 308 de signaux véhicule un signal interne, II1, du bloc 303 vers le bloc 302.

En langage SDL les signaux sont donc véhiculés par des canaux ou chemins de signaux, chacun ayant une origine et une destination. Ces origines et ces destinations sont des éléments de description du langage, à savoir des systèmes, des blocs, des processus ou autres éléments de description.

Le contenu d'un programme correspondant à la figure 3a, et décrit littéralement ci-dessous, est stocké dans une mémoire 602. Dans cette mémoire, il revêt la forme d'un texte contenant des mots clés propres au langage SDL. Ainsi le programme correspondant à la figure 3a est stocké en mémoire sous la forme de plusieurs lignes de texte, une première ligne contenant le mot clé "système" suivi de " : " et du nom du système soit "S1". Puis ce programme comporte des lignes de description de ce système dépendant de la première ligne soit par une annotation soit par des symboles enrobant le contenu de la description du système. Dans l'exemple, on a choisi des accolades ouvrantes et fermantes. Les mots clés choisis, soient "Contient", "Entrée" et "Sortie", ne l'ont été qu'à titre d'exemple.

Ce programme s'écrit

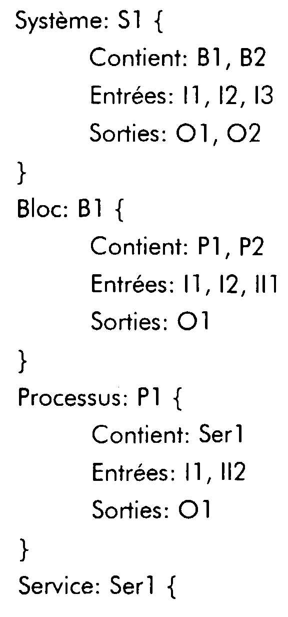

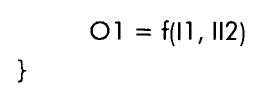

On remarque que le contenu de la mémoire se rapportant à la figure 3a n'est pas suffisant pour décrire totalement celle-ci. En effet, à sa lecture on ne sait pas vers quel bloc ni de quel bloc sont dirigées les entrées et les sorties. Pour le savoir, il faut attendre la description des blocs contenus dans le système S1. Il s'agit là d'une des faiblesses du langage SDL, puisqu'il y a une forte corrélation entre les éléments constituant une description, et les différents niveaux de cette description.

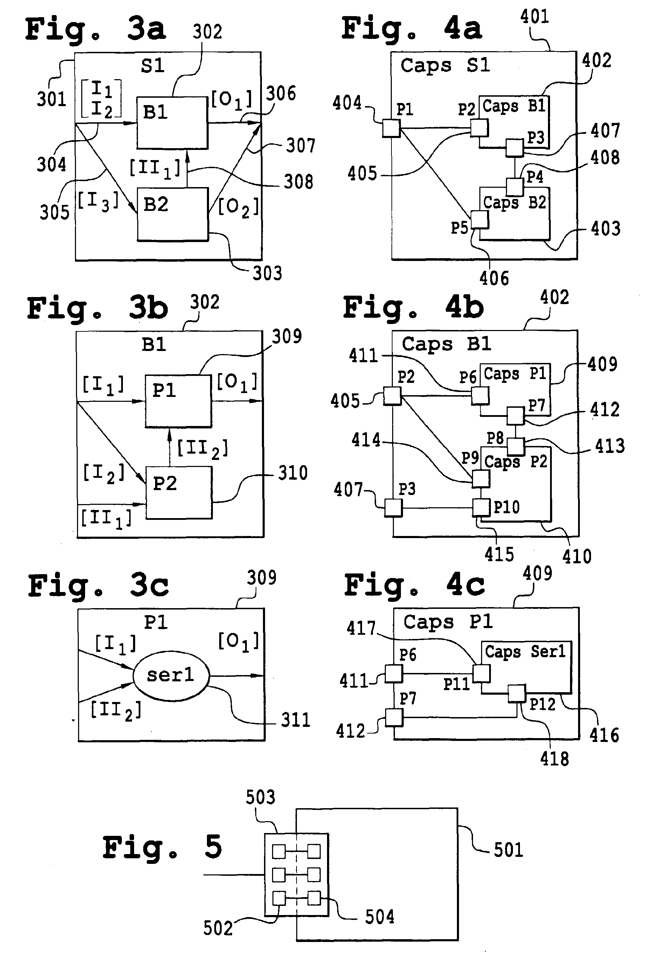

La figure 3b montre le détail du contenu du bloc 302. Le bloc 302 contient un processus 309 (P1) et un processus 310 (P2). La figure 3b montre aussi que le processus P1 reçoit le signal I1 et un signal 112 issu du processus P2. Le processus P1 a un signal de sortie qui est O1. D'autre part le processus P2 reçoit en entrée les signaux I2 et II1. Le programme correspondant au bloc 302 est contenu en mémoire de la même façon que le système S1. Si ce n'est que le mot clé pour le décrire est différent puisqu'il s'agit d'un bloc et non plus d'un système. La description du bloc B1 permet de savoir ce qu'il contient, mais pas la façon dont sont utilisés les signaux à l'intérieur du bloc. Pour le savoir, il faut connaître la description du bloc inférieur, par exemple le processus P1.

La figure 3c montre les détails du processus P1. Le processus P1 contient un service 311 (Ser1). La figure 3c montre aussi que le bloc P1 reçoit en entrée les signaux I1 et II2 et a en sortie le signal O1. Dans la mesure où ce processus ne contient qu'un seul service, il peut apparaître comme évident que les entrées du processus P1 sont les entrées du service Ser1 et que la sortie du processus P1 est aussi la sortie du service Ser1. Cependant il s'agit là d'un cas simple qui est pris pour exemple. Dans la pratique, il peut très bien exister des processus comportant plusieurs services. Il existe aussi en langage SDL des procédures, mais celles-ci sont traitées de la même manière que les services. Les services et les procédures ont un comportement qui est défini par une machine à états finis dont l'état évolue en fonction des entrées.

On remarque que la description du service Ser1 est fortement liée, à et est conditionnée par, la description des différents éléments qui le contiennent, à savoir le processus P1, le bloc B1 et le système S1. Une analogie avec le domaine de l'électronique, reviendrait à dire qu'il s'agit d'un système câblé, au sens soudé, donc peu aisé à modifier.

La figure 4a montre la description du même système que celui de la figure 3a, mais en langage UML-RT. La figure 4a montre une capsule 401 dont le nom est capsS1. La capsule 401 contient une capsule 402 (capsB1) et une capsule 403 (capsB2). La capsule se présente sous la forme d'un parallélépipède. Les côtés de ce parallélépipède peuvent contenir d'autres parallélépipèdes plus petits qui sont appelés des ports. La capsule 401 comporte un port P1. La capsule 402 comporte un port P2 et un port P3, la capsule 403 comporte un port 406 (P5) et un port 408 (P4) Cette figure est stockée en mémoire sous la forme d'un fichier texte contenant des mots clés UML-RT. Les mots clés sont différents de ceux utilisés dans le langage SDL. Ici, pour la commodité de la description et la compréhension de l'invention, on a utilisé des mots clés similaires, notamment pour la description de l'intérieur des capsules. Dans la partie de la description stockée en mémoire correspondant à la figure 4a, on trouve le mot clé capsule, suivi du nom de la capsule ici capsS1 et de la description du contenu de la capsule contenu, dans un exemple, entre des accolantes ouvertes et fermées. On lit donc que la capsule capsS1 contient une capsule capsB1 et une capsule capsB2 ainsi qu'un port P1.

Ceci s'écrit de la manière suivante :

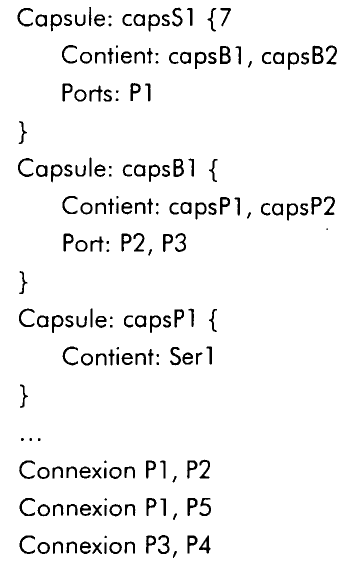

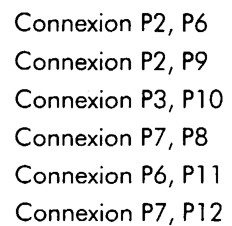

La description de la capsule P1 ne suffit pas pour établir les liens qui existent entre les capsules qu'elle contient et elle-même. Cependant cette description n'est pas non plus contenue dans les capsules qu'elle contient. Il faut attendre la suite du fichier décrivant l'application en langage UML-RT pour savoir comment sont connectés les ports correspondants aux différentes capsules. Cela permet de différencier le comportement des capsules, c'est à dire leur utilité, de la façon dont elles communiquent avec les autres éléments de l'application.

La figure 4b montre le contenu de la capsule capsB1. Elle est à regarder en parallèle avec la figure 3b. La capsule 402 comporte un processus 409 (capsP1) et un processus 410 (capsP2). La capsule capsB1 contient aussi les ports 405 et 407. La capsule 409 comporte les ports 411 (P6) et 412 (P7), la capsule 410 comporte les ports 413 (P8) et 414 (P9) et 415 (P10).

Toutes les capsules sont représentées de la même manière en mémoire par des textes de programme correspondant.

La figure 4c montre le contenu de la capsule 409. La capsule 409 comporte une machine 416 à états finis (capsSer1) dont le comportement est identique à la machine 311 à états finis de la figure 3c. Cependant les deux machines à états finis ne sont pas décrites de la même façon. Le service 416 comporte les ports 417 (P11) et 418 (P12).

Dans la description UML-RT en mémoire, la description des capsules est suivie de la liste des connexions qui existent entre les différents ports appartenant à ces capsules. Il est ainsi facile de modifier une capsule ou de l'utiliser dans une autre application. En effet la connaissance du nom d'une capsule renseigne sur tout ce qu'elle contient, à savoir des sous-capsules et tous les ports associés à ces capsules et à ces sous-capsules. Pour avoir la capsule complète, il suffit ensuite de lire dans la liste des connexions, les connexions qui mettent en oeuvre les ports contenus dans la capsule.

La figure 5 illustre le principe d'un port. La figure 5 montre une capsule 501 comportant un port 502. Le port 502 peut se décomposer en deux parties. Une partie 503 externe à la capsule, et une partie 504 externe à la capsule. Le comportement de la capsule est défini par rapport à la partie 504 interne. Par contre lorsqu'elle est utilisée la capsule est vue par sa partie 503 externe. Pour faire une analogie à l'électronique, il s'agit d'un branchement par opposition au câblage SDL.

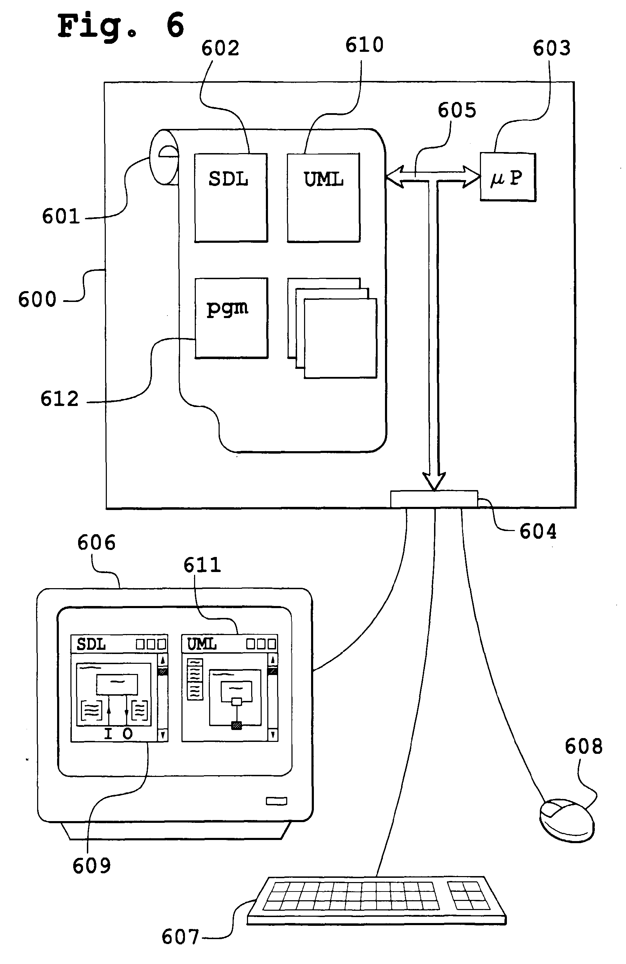

La figure 6 montre un ordinateur 600 comportant un bloc mémoire 601, un microprocesseur 603 et un périphérique 604 de communication. Les éléments 601, 603 et 604 sont interconnectés par un bus 605. Le périphérique 604 permet de connecter l'ordinateur à un écran 606, à un clavier 607 et à un dispositif 608 de pointage.

Le bloc mémoire 601 comporte une mémoire 602, dont le contenu est représenté sur l'écran 606 de manière graphique dans une fenêtre 609. La fenêtre 609 contient des éléments correspondant au langage SDL et à la description contenue dans la mémoire 602. Le passage de la mémoire 602 à la fenêtre 609 se fait grâce à un programme contenu dans la mémoire 601 et exécuté par le microprocesseur 603. Les informations nécessaires à l'affichage sont véhiculées par le bus 605 puis le dispositif 604. Le bloc mémoire 601 comporte aussi une mémoire 610 correspondant au langage UML-RT et dont le contenu est affiché à l'écran 606 dans une fenêtre 611. Un programme selon l'invention contenu dans une mémoire 612 du bloc 601 permet de passer du contenu de la mémoire 602 au contenu de la mémoire 610.

Selon l'invention, le programme de la mémoire 612 fait lire au microprocesseur 603 le texte de programme contenu de la mémoire 602, et lui fait rechercher des mots clés du langage SDL. Une fois qu'il les a trouvés, il les remplace par des mots clés adéquats en langage UML-RT. Puis il écrit dans la mémoire 610 un texte de programme résultant de ce remplacement. Dans la pratique il s'agit de trouver des mots clés correspondant aux mots systèmes, blocs, processus, services et procédures et à les remplacer par le mot clé capsule. Toutefois, le nom des différents éléments caractéristiques des langages peut très bien être identique d'une représentation à l'autre.

Puis le programme 612 va déterminer le nombre de port qu'il faut pour chaque capsule ainsi créée. Pour déterminer ce nombre de ports, il détermine le nombre d'origine dont la capsule va recevoir des signaux. A chaque origine va correspondre un port. Ainsi, dans un exemple, la capsule 410 reçoit le signal I2 de la part du port P2, le signal II1 de la part du port P3 et émet le signal II2 en direction de la capsule 409. La capsule 410 aura donc trois ports.

Une fois que le programme 612 a transcrit le contenu de la mémoire 602 dans la mémoire 610, on peut alors visualiser le contenu de la mémoire 610 dans la fenêtre 611 grâce à des outils existants et permettant de visualiser en mode graphique le contenu de la mémoire 610. Dans la pratique, le langage HTML est directement programmé via une interface de graphiques. C'est-à-dire que le fichier 610 est généré automatiquement à partir des dessins que va faire l'utilisateur dans la fenêtre 611 en se servant du clavier 607 et du dispositif 608 de pointage.

Grâce aux caractéristiques du langage UML-RT, un utilisateur va pouvoir, grâce aux outils adéquats, modifier et faire évoluer le contenu de la mémoire 610 et donc réutiliser ou faire évoluer des programmes initialement écrits en langage SDL ce qui a priori n'était pas possible.

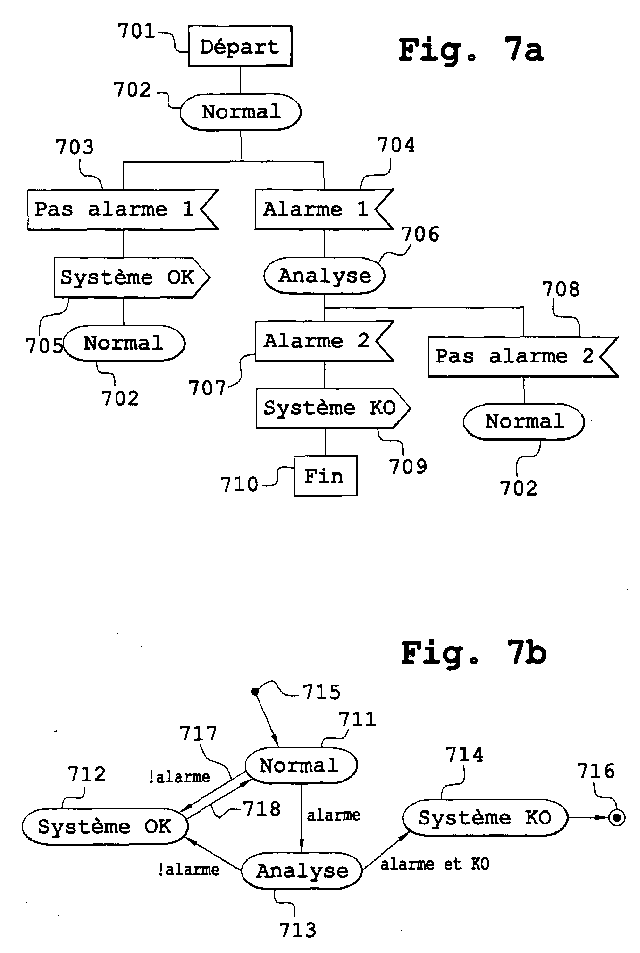

La figure 7a montre une description du comportement d'un service en langage SDL. Il s'agit d'un graphe décrivant le comportement d'une machine à états finis. La figure comporte différent type d'état, parmi ceux ci, un état 701 de départ. L'état 701 n'existe que pour indiquer quelle est la première action entreprise lors de la première sollicitation du service par l'application à laquelle il appartient. L'état 701 est suivi, dans l'exemple choisi, d'un état 702 normal. L'état 702 est un état d'action, c'est à dire qu'il correspond à des opérations effectuées par le service lorsqu'il se trouve dans cet état. Ici l'état 702 correspond à une activité normale de l'application. Ce graphe est stocké dans la mémoire 602 avec uns syntaxe correspondant au langage SDL.

Comportement d'un service SDL :
Départ: état normal
Etat: normal
Action 1 :...
Action N:...
Suivant: pas alarme1 ET alarme 1
Etat: pas alarme 1
Signal: alarme
Condition: alarme = faux
Suivant: système OK
Etat: système OK
Signal: RAS
Valeur: vraie
Suivant: normal
Etat: alarme 1
Signal: alarme
Condition: alarme = vraie
Suivant: analyse
Etat: analyse
Action 1:...
Action M:...
Suivant: alarme 2 ET pas alarme 2
Etat: alarme 2
Signal: alarme
Condition: alarme = vraie
Suivant: système KO
Etat: pas alarme 2
Signal: alarme
Condition: alarme = faux
Suivant: normal
...

L'état 702 est suivi de l'état 703 "pas alarme 1" et de l'état 704 "alarme 1". Ces deux états sont des états d'attente de signal. On voit ici une faiblesse de la représentation SDL, puisque à la sortie de l'état 702, le service se retrouve dans deux états, ce qui nuit à la compréhension du graphe. De plus il y a une confusion possible entre une action du service et une simple évaluation ou transition entre deux états.

L'état 703 est suivi de l'état 705 "système OK" qui est un état d'émission d'un message indiquant que le système est en bon état. Dans l'exemple choisi le service surveille l'activité d'un processus quelconque. Puis une fois ce message émis, c'est à dire d'après la description existant en mémoire de l'état "système OK" il s'agit de mettre à vraie un signal du nom de RAS, on passe à l'état 702. Un autre défaut de SDL est qu'il représente plusieurs fois les états par lesquels on passe plusieurs fois lors de l'exécution du service. Ainsi l'état 702 est représenté trois fois sur la figure 7a. Cela peut nuire à la compréhension d'un service si l'on considère le fait qu'un écran à une taille donnée donc une capacité d'affichage, en nombre d'état, limitée.

L'état 704 est suivi de l'état 706 "analyse". Lui-même est suivi des états 707 "alarme 2" et 708 "pas alarme 2". Ces états sont identiques aux états 703 et 704, si ce n'est qu'il ne sont pas suivis des même états. Cette considération n'est pas prise en compte dans la représentation, dans la mémoire 602, du service. Dans le cas d'état effectuant de nombreuses actions cela peut être gênant en termes de place occupée en mémoire, mais aussi en terme de maintenance de l'application. Il y a en effet, dans un tel cas, plusieurs point de maintenance pour résoudre un seul et même problème.

L'état 707 est suivi d'un état 709 "système KO" qui émet un signal indiquant que l'application ne peut pas se poursuivre. Puis l'état 709 est suivi de l'état 710 "fin" indiquant que le service s'arrête.

L'état 708 est suivi de l'état 702.

La figure 7b montre une machine à états finis représentant le même service qu'à la figure 7a mais dans un environnement UML-RT. Le passage de l'un à l'autre se fait en analysant le contenu de la mémoire 602 se rapportant à ce service. Une illustration de ce service est donnée par le listing Comportement d'un service SDL. On lit le contenu de la mémoire 602 afin de détecter les mots clés indiquant des états. Les états intéressant sont les états action et les états émission de message qui sont traduit en états dans le langage UML-RT. Bien sur les états présent plusieurs fois ne sont pas dupliquées.

Comportement d'un service UML-RT :
Etat 1: normal:
Propriété: départ.
Action 1:...
Action N:...
Etat 2: analyse:
Propriété:
Action 1:...
Action M:...
Etat 3: système OK:
Propriété:
Action 1: RAS = 1
Etat 4: système KO
Propriété: final
Action 1: RAS = 0
Transition 1 -> 3: alarme = faux
Transition 3 -> 1: vraie
Transition 1 -> 2: alarme = vraie
Transition 2 -> 4: alarme = vraie et KO = vraie

Ainsi les états 702, 705, 706 et 709 sont traduit respectivement en états 711 "normal", 712 "système OK", 713 "analyse" et 714 "système KO". On affecte à chaque état UML-RT ainsi créé un numéro qui servira pour définir les transitions. Le nombre d'état diminue donc dans la traduction de SDL vers UML-RT, il y a donc une meilleure visualisation du service décrit. Chaque état en langage UML-RT à des propriétés, ainsi l'état 711 est l'état de départ car il s'agit de celui qui suit immédiatement l'état 701 départ dans la description SDL. De même l'état 714 est un état final puisque qu'aucun état ne le suit. Les états de départ et finaux sont visualisés grâce à des symboles 715 respectivement 716.

Le stockage des états dans a mémoire 610 est accompagné de la description des transitions. Ces transitions sont obtenues par l'analyse des états de réception de signaux SDL, c'est à dire les états 703, 704 707 et 708. Ceux si sont détectables car il comporte un mot clé se rapportant à une condition. Ainsi la transition 717 UML-RT correspond à l'état 703 du graphe SDL.

Il existe aussi des passages d'état à état non conditionné, par exemple le passage de l'état 705 à l'état 702 qui s'effectue dès que l'action de l'état 705 ont été effectuées. Ces passages sont traduit par des transitions systématiques. Une illustration en est donnée par la transition 718 qui est toujours validée, c'est à dire que sa condition de validation, stockée dans la mémoire 610, est toujours vraie. Dans la représentation Comportement d'un service UML-RT il s'agit de la transition 3 -> 1.

## Revendications

1. Procédé de traduction automatique d'une première spécification écrite en langage SDL, en une second spécification écrite en langage UMLRT, ladite première spécification comportant des notions de système (101), de blocs (102), de processus (106), de services (108), de canaux (104) et ou de chemins (105) de signaux en fonction d'un niveau de détail décrit dans une application à spécifier, caractérisé en ce que
- on remplace des notions clés correspondant aux éléments système, blocs, processus et service du langage SDL par des notions clés capsules du langage UML-RT,
- on remplace des notions clés correspondant à canaux et chemins de signaux du langage SDL par des notions clés correspondantes connexions et ports du langage UML-RT,
- on remplace des notions clé correspondant à des signaux en langage SDL par des notions clé correspondant à des signaux en langage UML-RT.

2. Procédé selon la revendication 1, caractérisé en ce que pour traduire les canaux et chemins de signaux SDL :
- on identifie les canaux et chemins de signaux unidirectionnels ayant des extrémités communes, origine ou destination,
- on regroupe ces canaux et chemins de signaux SDL dans une connexion UML-RT bidirectionnelle entre deux ou plus de ports UML-RT utilisant un même protocole défini à partir des signaux qui transitent par les canaux et chemins de signaux ainsi regroupés.

3. Procédé selon l'une des revendications 1 ou 2, caractérisé en ce que :
- on identifie les états action et émissions de signaux SDL avec des états UML-RT,
- on traduit les états d'attente de signal SDL par des transitions UML-RT.
